# EUROPEAN PATENT SPECIFICATION

(11) **EP 0 680 160 B1**
(45) Date of publication and mention of the grant of the patent: **11.02.2004**
(21) Application number: 95302771.1
(22) Date of filing: 25.04.1995
(51) Int. Cl.: H04B 7/005, H04Q 7/38

(54) **Method and apparatus for transmission power control of a mobile station during soft handoff in a CDMA system**
Verfahren und Anordnung zur Sendeleistungsregelung einer Mobil-Station während eines soft handoff in einem CDMA System.
Procédé et dispositif de contrôle de la puissance de transmission d'une station mobile pendant une commutation douce dans un système à accès multiple par division de code

(30) Priority: 27.04.1994 JP 9035094; 03.04.1995 JP 7793495
(43) Date of publication of application: 02.11.1995
(73) Proprietor: NTT DoCoMo, Inc., Tokyo 100-6150 (JP)
(72) Inventor: Dohi, Tomohiro, Isogo-ku, Yokohama-shi, Kanagawa 235 (JP); Ohno, Koji, Isogo-ku, Yokohama-shi, Kanagawa 235 (JP); Sawahashi, Mamoru, Yokosuka-shi, Kanagawa 239 (JP); Higashi, Akihiro, Yokosuka-shi, Kanagawa 238-03 (JP); Umeda, Narumi, Yokohama-shi, Kanagawa 236 (JP)
(74) Representative: Beresford, Keith Denis Lewis

(56) References cited:
- EP-A- 0 322 525
- EP-A- 0 492 800
- EP-A- 0 548 939
- WO-A-92/12602
- WO-A-92/17953
- WO-A-93/21739
- US-A- 5 267 261
- PATENT ABSTRACTS OF JAPAN vol. 15, no. 143 (E-1054) 11 April 1991 & JP-A-03 019 532 (FUJITSU LTD) 28 January 1991
- PATENT ABSTRACTS OF JAPAN vol. 15, no. 348 (E-1107) 04 September 1991 & JP-A-03 133 222 (NEC CORP) 06 June 1991

## Description

The present invention relates to a transmission power control method for radio communications using a CDMA (Code Division Multiple Access) system, and a mobile station using this method.

In CDMA systems, transmission power control is an essential technique. This is because SIRs (Signal-to-Interference Ratios) of signals which are transmitted from mobile stations and received by a base station within a cell must be kept equal to each other at the base station to prevent the reduction in the capacity in terms of the number of subscribers. In addition, SIRs of signals which are transmitted from the base station and received by the mobile stations must be made equal.

CDMA systems can use a characteristic channel transfer method called soft handoff. The soft handoff is characterized by commencing communications with a new base station before terminating communications with the old base station. Specifically, a mobile station transmits a signal simultaneously to the old base station and a new base station in the same code and at the same frequency, in different codes and at the same frequency, in the same code and at different frequencies, or in different codes and at different frequencies, and transfers communications from the old base station to the new base station in accordance with received power of signals independently received from the two base stations. Therefore, the soft handoff is an effective method for reducing transmission power of the mobile stations and base stations.

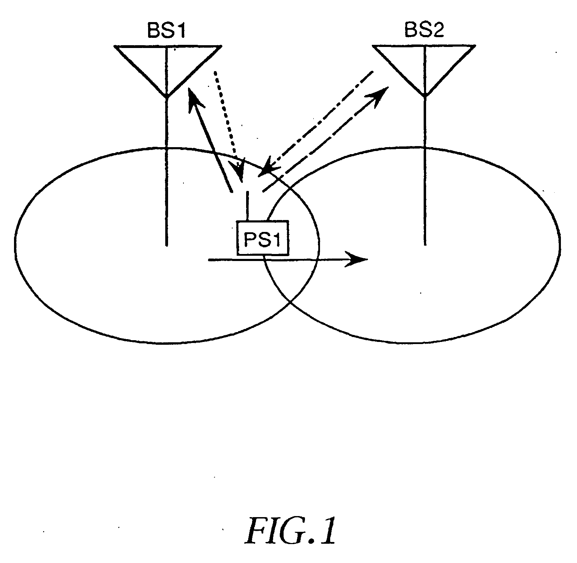

Fig. 1 schematically illustrates a soft handoff. In Fig. 1, the reference character BS1 designates an old base station, BS2 designates a new base station, and PS1 denotes a mobile station that transmits a signal or signals to the two base stations BS1 and BS2. In this case, the mobile station transmits one wave when the same code and the same frequency are used, and two waves when different codes and different frequencies are used. On the other hand, the base stations BS1 and BS2 transmit independent signals of the same content to the mobile station PS1. In this figure, the mobile station PS1 is transferring its communications with the old base station BS1 to communications with the new base station BS2.

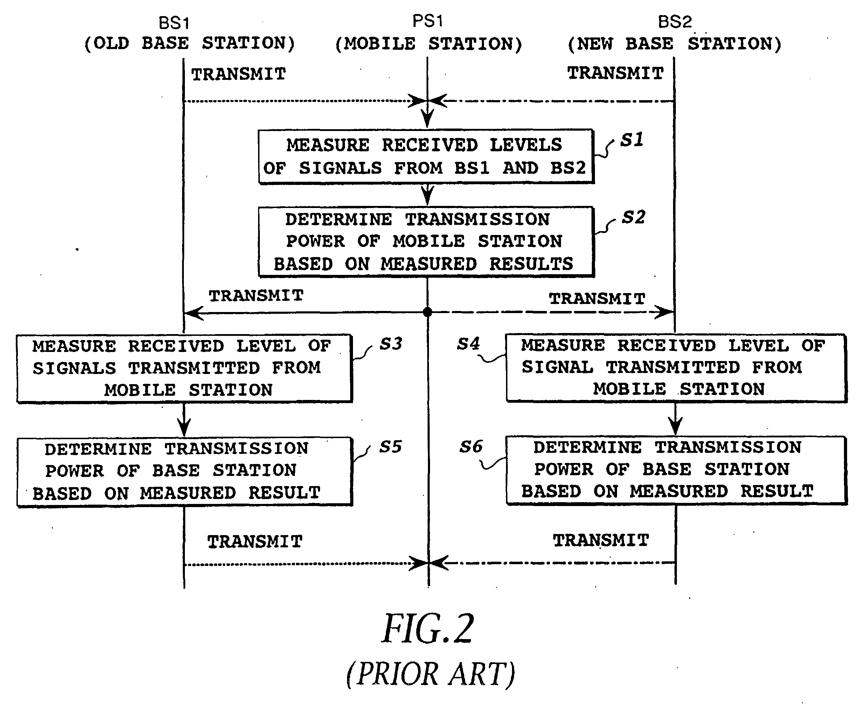

Fig. 2 shows a conventional transmission power control method during a soft handoff. When the mobile station PS1 in the cell linked to the base station BS1 is moving as shown in Fig. 1, it starts a soft handoff from the old base station BS1 to the new base station BS2. More specifically, the mobile station PS1 detects the reduction in the received power in the perch channel from the old base station BS1, and starts the soft handoff to a new base station having a perch channel which provides the mobile station PS1 with highest received power among neighboring cells. Here, a perch channel refers to a channel used when a mobile station selects a new base station. Each base station transmits through its perch channel. The mobile station measures received powers sent through the perch channels of respective base stations, and begins to change the connection to the base station which provides the mobile station with the maximum received power. Thus, the mobile station selects the new base station that provides the maximum received power. During the soft handoff, the transmission power control is performed by open loop control. Fig. 2 illustrates this. The mobile station PS1 measures received power levels from the base stations BS1 and BS2 at step S1, and controls its transmission power levels to the base stations BS1 and BS2 independently at step S2 on the basis of the received power levels. On the other hand, the base stations BS1 and BS2 measure received power levels from the mobile station at steps S3 and S4, respectively, and control their transmission power levels to the mobile station PS1 at steps S5 and S6 independently.

Thus, the open loop transmission power control is used in the conventional soft handoff. As a result, highly accurate transmission power control cannot be achieved in the case where there is little correlation between a forward (from base station to mobile station) channel and a reverse (from mobile station to base station) channel. This presents a problem in that the capacity in terms of the number of subscribers is reduced.

US patent 5,267,261 describes such a system, including soft handoff from communications between a mobile station and a first base station to communications between the mobile station and a second base station.

Therefore, an object of the present invention is to provide a transmission power control method in a CDMA system, and a mobile station using the same, which can increase the capacity in terms of the number of subscribers by implementing highly accurate, power reduced transmission power control.

According to a first aspect of the present invention, there is provided a transmission power control method for implementation by a mobile station communicating with multiple base stations, in which, during a handoff period, the mobile station communicates with two base stations, the mobile station implementing a closed loop transmission power control during a soft handoff which transfers communication between the mobile station and an old base station to communication between the mobile station and a new base station in a CDMA system, the transmission power control method being characterised by comprising the steps of: measuring, at the mobile.station, a first SIR of a signal transmitted by the old base station; measuring, at the mobile station, a second SIR of a signal transmitted by the new base station; comparing, at the mobile station, the first SIR with the second SIR; selecting, at the mobile station, from said first SIR and said second SIR, the greater SIR; deciding, at the mobile station, in accordance with the selected SIR, a first transmission power control bit for designating transmission power of the old base station and the new base station; and transmitting the first transmission power control bit from the mobile station to the old base station and the new base station.

According to a second aspect of the present invention, there is provided a mobile station communicating, during a handoff period, with an old base station in a cell of which the mobile station exists, and a new base station to which the mobile station transfers to implement closed loop transmission power control in a CDMA system, the mobile station being characterised by comprising: a first desired wave received power detector for detecting received power of a desired wave of a signal transmitted by the old base station; a first interference wave received power detector for detecting received power of an interference wave to the desired wave of the signal transmitted by the old base station; a first SIR calculator for calculating a first SIR based on the received power detected by the first desired wave received power detector and the received power detected by the first interference wave received power detector; a second desired wave received power detector for detecting received power of a desired wave of a signal transmitted by the new base station; a second interference wave received power detector for detecting received power of an interference wave to the desired wave of the signal transmitted by the new base station; a second SIR calculator for calculating a second SIR based on the received power detected by the second desired wave received power detector and the received power detected by the second interference wave received power detector; an SIR selector for comparing the first SIR with the second SIR and selecting from the first SIR and the second SIR, the greater SIR; means arranged to decide, in accordance with the selected SIR, a first transmission power control bit for designating transmission power of the old base station and the new base station; and a transmitter for transmitting the first transmission power control bit to the old base station and the new base station.

The above and other objects, effects, features and advantages of the present invention will become more apparent from the following description of the embodiment thereof taken in conjunction with the accompanying drawings.
Fig. 1 is a schematic diagram illustrating a common soft handoff;
Fig. 2 is a diagram illustrating a conventional transmission power control method;
Fig. 3 is a diagram illustrating a first transmission power control method in accordance with the present invention;
Fig. 4 is a diagram illustrating a second transmission power control method in accordance with the present invention;
Fig. 5 is a diagram illustrating a third transmission power control method in accordance with the present invention; and
Figs. 6A and 6B are block diagrams showing an embodiment of a mobile station, to which the third transmission power control method in accordance with the present invention is applied.

The invention will now be described with reference to the accompanying drawings.

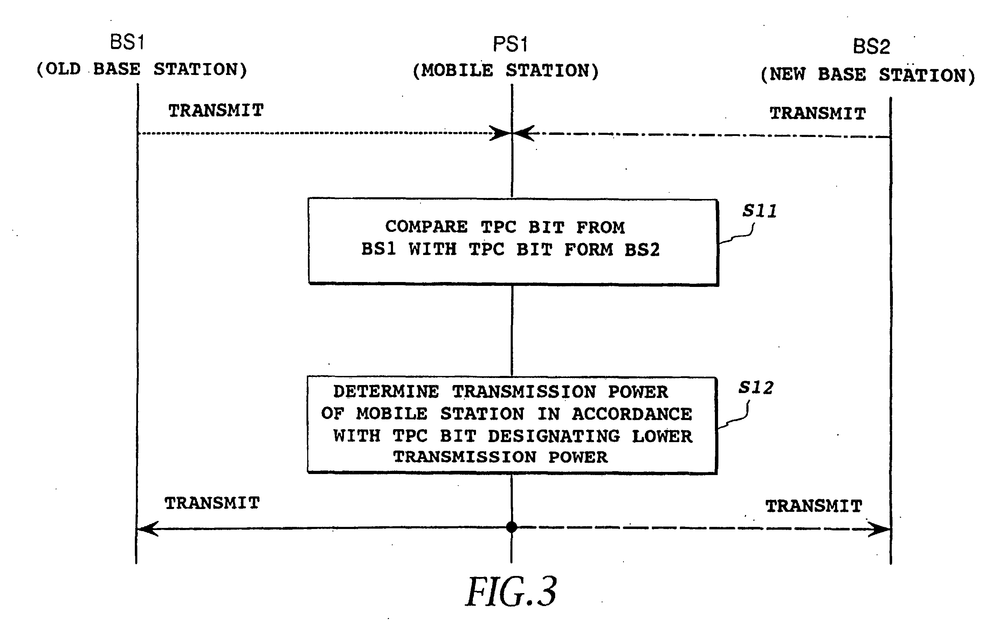

Fig. 3 illustrates a first method in accordance with the present invention. When the mobile station PS1 is carrying out a soft handoff with respect to the base stations BS1 and BS2, the mobile station determines its transmission power level to the base stations BS1 and BS2 in accordance with the transmission power control bits transmitted from these base stations BS1 and BS2, thereby performing a closed loop transmission power control.

More specifically, the mobile station compares the transmission power control bit from the base stations BS1 with that from the base station BS2 at step S11. Since the transmission power control bit from the base station BS1 and that from the base station BS2 are independent of each other, the values of the bits may differ from each other. In such a case, the mobile station PS1 determines its transmission power in accordance with the transmission power control bit that indicates lower transmission power to the mobile station PS1 at step S12.

Thus, according to the present invention, when the mobile station PS1 is moving from the old base station BS1 to the new base station BS2, the transmission power control of the mobile station is performed in accordance with the transmission power control bit transmitted from the base station having greater received SIR than the other base station. As a result, the received SIR at the old base station BS1 is rapidly reduced, and the channel between the old base station BS1 and the mobile station is disconnected. This makes it possible to complete the soft handoff in a short time, and to reduce the transmission power, as well. Reduction in the transmission power of the mobile station PS1 thus achieved makes it possible to reduce the interference to other cells, and hence, to increase the capacity in terms of the number of subscribers.

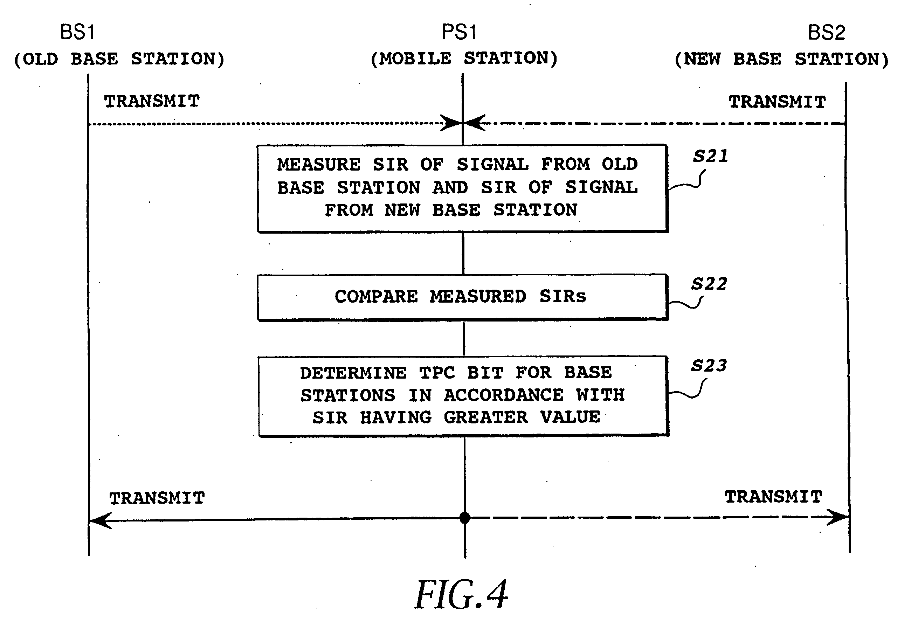

Fig. 4 illustrates a second method in accordance with the present invention. When the mobile station PS1 is carrying out a soft handoff with respect to the base stations BS1 and BS2, the base stations BS1 and BS2 determine their own transmission power levels to the mobile station PS1 in accordance with the transmission power control bit for the base stations which is transmitted from the mobile station, thereby performing a closed loop transmission power control as in the case of Fig. 3.

Next, a method in which the mobile station PS1 determines the transmission power control bit for the base stations will be described. The transmission power control bit is used to determined the transmission power of the base stations BS1 and BS2. Since the base stations BS1 and BS2 transmit independent waves to the mobile station PS1, the received SIRs at the mobile station will differ from each other. Taking account of this, the transmission power control bit for the base stations is determined as shown in Fig. 4.

In Fig. 4, the mobile station PS1 measures the received SIR from the old base station BS1 and that from the new base station BS2 at step S21. Subsequently, the mobile station PS1 compares the two SIRs at step S22, and determines the transmission power control bit for the base stations in accordance with the SIR having a greater value at step S23.

Thus, according to the present invention, when the mobile station PS1 is moving from the old base station BS1 to the new base station BS2, the mobile station PS1 determines the transmission power control bit for the base station on the basis of the greater received SIR at the mobile station. As a result, the received SIR from the old base station BS1 is rapidly reduced, and the channel between the old base station BS1 and the mobile station PS1 is disconnected. This makes it possible to complete the soft handoff in a short time, and to reduce the transmission power, as well. Reduction in the transmission power of the base stations thus achieved makes it possible to prevent the base stations from becoming interference sources to other cells, and hence, to increase the capacity in terms of the number of subscribers.

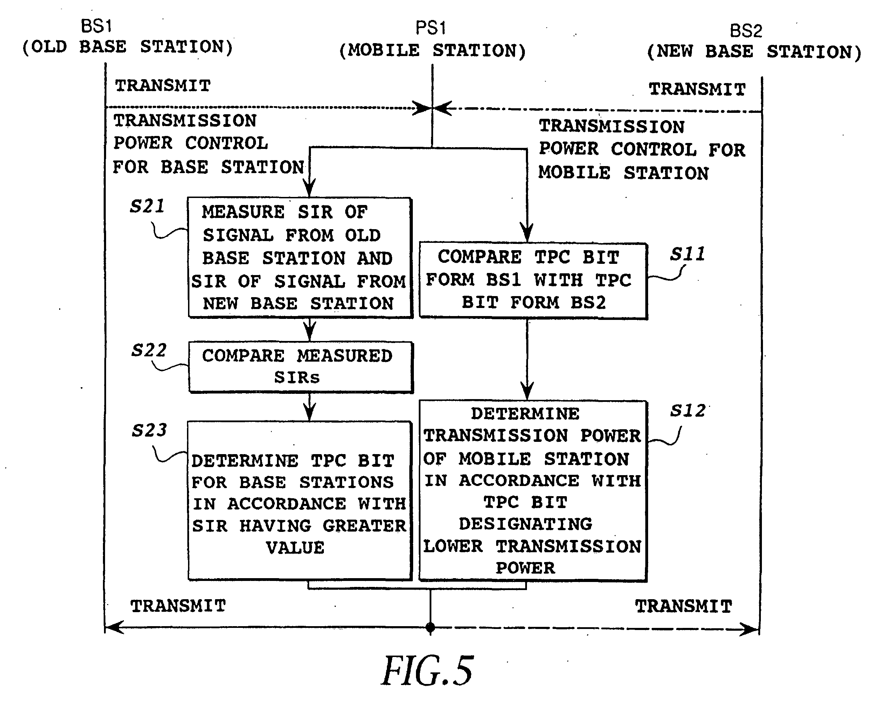

Fig. 5 illustrates a third method in accordance with the present invention, which is normally employed in actual transmission power control. In Fig. 5, the transmission power of the mobile station PS1 is determined at steps S11 and S12 as in Fig. 3, and the transmission power control bit for the base stations, which is used to determine the transmission power of the base stations BS1 and BS2, is determined at steps S21 - S23 as in Fig. 4.

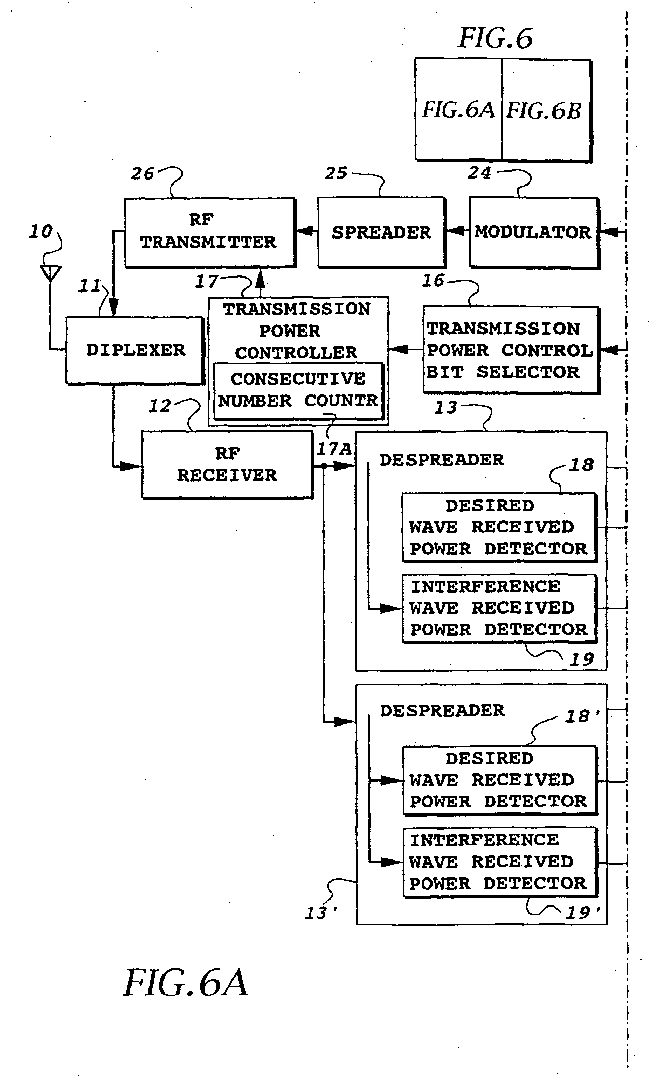

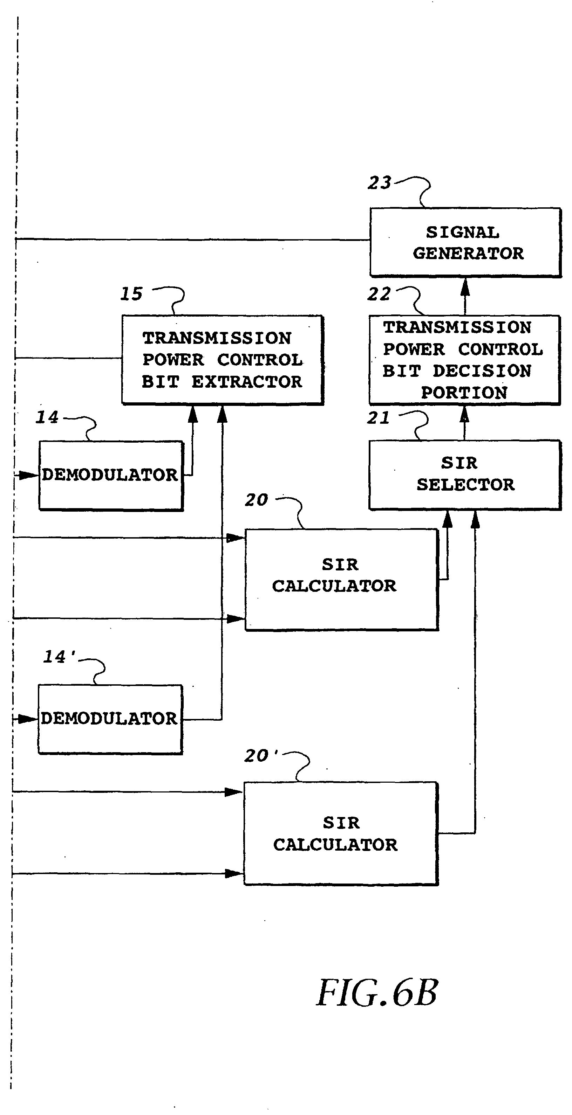

Figs. 6A and 6B are block diagrams showing an embodiment of the mobile station PS1 in accordance with the present invention.. In Figs. 6A and 6B, the reference numeral 10 designates an antenna, the reference numeral 11 designates a diplexer, the reference numeral 12 designates an RF receiver, the reference numerals 13 and 13' designate despreaders, the reference numerals 14 and 14' designate demodulators, the reference numeral 15- designates a transmission power control (TPC) bit extractor, the reference numeral 16 designates a transmission power control bit selector, the reference numeral 17 designates a transmission power controller, the reference numerals 18 and 18' designate desired wave received power detectors provided in the despreaders 13 and 13', the reference numerals 19 and 19' designate interference wave received power detectors provided in the despreaders 13 and 13', the reference numerals 20 and 20' designate SIR calculators, the reference numeral 21 designates an SIR selector, the reference numeral 22 designates a transmission power control bit decision portion, the reference numeral 23 designates a signal generator, the reference numeral 24 designates a modulator, the reference numeral 25 designates a spreader, and the reference numeral 26 designates an RF transmitter.

Next, the operation of the mobile station will be described referring to Figs. 6A and 6B. A spread-spectrum signals transmitted from the base stations BS1 and BS2 are received by the antenna 10. The received signals are inputted to the RF receiver 12 via the diplexer 11.

In the RF receiver 12, the received signals are passed through a bandpass filter (BPF) to remove components outside the pass band, and are amplified by an amplifier. The amplified signal is downconverted to an intermediate frequency (IF) signal by a signal generated by a local oscillator. The IF signal is passed through a bandpass filter, and its levels is corrected to an appropriate signal level by an automatic gain control circuit (AGC). The output of the AGC undergoes a quasi-coherent detection, and is frequency-converted into a baseband signal. The baseband signal is passed though a lowpass filter. (LPF), undergoes an analog-to-digital (A/D) conversion, and is outputted as a digital signal.

The digital signal outputted from the RF receiver 12 is despread by the despreaders 13 and 13', and are outputted as narrow band modulated signals similar to those generated at the base stations BS1 and BS2. The modulated signals are demodulated by the demodulators 14 and 14'.

The outputs of the demodulators 14 and 14' are supplied to the transmission power control bit extractor 15 which extracts from the demodulated signals the transmission power control bits transmitted from the base stations BS1 and BS2. The extracted transmission power control bits are compared by the TPC selector 16, and the TPC bit that indicates smaller transmission power of the mobile station is selected when the two TPC bits differ. The selected TPC bit is supplied to the transmission power controller 17, which determines the transmission power of the mobile station on the basis of the selected transmission power control bit, and provides the RF transmitter 26 with the transmission power control information.

On the other hand, the desired wave received power detectors 18 and 18' and the interference wave received power detectors 19 and 19' in the despreaders 13 and 13' detect the desired wave received powers from the base stations BS1 and BS2, and the interference wave received powers to the desired received waves from the base stations, respectively. On the basis of the detected desired wave received powers and the interference wave received powers, the SIR calculators 20 and 20' obtain the received SIRs of the signals transmitted from the base stations BS1 and BS2, respectively. The SIR selector 21 compares the two received SIRs, and selects the received SIR whose value is greater than the other.

The transmission power control bit decision portion 22 compares the selected received SIR with a predetermined reference SIR, and produces a transmission power control bit which commands an increase in the transmission power of the base stations when the received SIR is less than the reference SIR, or produces a transmission power control bit which commands a decrease in the transmission power when the received SIR is greater than the reference SIR, and supplies the transmission power control bit to the signal generator 23.

The signal generator 23 forms a frame to be transmitted, which includes the transmission power control bit supplied from the transmission power control bit decision portion 22, and provides it to the modulator 24 as a transmitted signal. The transmitted signal is modulated by the modulator 24, spread by the spreader 25, and is supplied to the RF transmitter 26. The transmitted signal which is frequency converted to an IF and then to an RF band by the RF transmitter 26 is transmitted at the transmission power based on the control information outputted from the transmission power controller 16.

The present invention has been described in detail with respect to an embodiment, and it will now be apparent from the foregoing to those skilled in the art that changes and modifications may be made without departing from the invention in its broader aspects, and it is the intention, therefore, in the appended claims to cover all such changes and modifications as fall within the scope of the appended claims.

## Claims

1. A transmission power control method for implementation by a mobile station (PS1) communicating with multiple base stations, in which, during a handoff period, the mobile station (PSI) communicates with two base stations (BS1, BS2), the mobile station (PS1) implementing a closed loop transmission power control during a soft handoff which transfers communication between the mobile station (PS1) and an old base station (BS1) to communication between the mobile station (PS1) and a new base station (BS2) in a CDMA system, the transmission power control method being **characterised by** comprising the steps of:
measuring, at the mobile station (PS1), a first SIR of a signal transmitted by the old base station (BS1) (S21);
measuring, at the mobile station (PS1), a second SIR of a signal transmitted by the new base station (BS2) (S21);
comparing, at the mobile station (PS1), the first SIR with the second SIR (S22);
selecting, at the mobile station (PS1), from said first SIR and said second SIR, the greater SIR;
deciding, at the mobile station (PS1), in accordance with the selected SIR, a first transmission power control bit for designating transmission power of the old base station (BS1) and the new base station (BS2) (S23); and
transmitting the first transmission power control bit from the mobile station (PS1) to the old base station (BS1) and the new base station (BS2).

2. The transmission power control method as claimed in claim 1 further comprising the steps of:
extracting, at said mobile station (PS1), a second transmission power control bit which designates transmission power of the mobile station (PS1), from a signal transmitted by the old base station (BS1);
extracting, at said mobile station (PS1), a third transmission power control bit which designates transmission power of the mobile station (PS1), from a signal transmitted by the new base station (BS2);
comparing, at the mobile station (PS1), the transmission power designated by said second transmission power control bit and the transmission power designated by said third transmission power control bit (S11);
selecting, at the mobile station (PS1), from said second transmission power control bit and said third transmission power control bit, the transmission power control bit designating the lower transmission power; and
controlling, at said mobile station (PS1), the transmission power of said mobile station (PS1) in accordance with said selected transmission power control bit (S12).

3. The transmission power control method as claimed in claim 1 or 2, wherein
the mobile station (PS1) transmits a signal to the old base station (BS1) and the new base station (BS2) by using an identical spreading code and an identical transmission frequency, different spreading codes and an identical transmission frequency, an identical spreading code and different transmission frequencies, or different spreading codes and different transmission frequencies, and
the mobile station (PS1) transfers communication from the old base station (BS1) to the new base station (BS2) in accordance with the received power of a signal received from each of the old base station (BS1) and the new base station (BS2).

4. A mobile station arranged to communicate, during a handoff period, with an old base station (BS1) in a cell of which the mobile station (PS1) exists, and a new base station (BS2) to which the mobile station (BS2) transfers to implement closed loop transmission power control in a CDMA system, the mobile station (PS1) being **characterised by** comprising:
a first desired wave received power detector (18) for detecting received power of a desired wave of a signal transmitted by the old base station (BS1);
a first interference wave received power detector (19) for detecting received power of an interference wave to the desired wave of the signal transmitted by the old base station (BS1);
a first SIR calculator (20) for calculating a first SIR based on the received power detected by the first desired wave received power detector (18) and the received power detected by the first interference wave received power detector (19);
a second desired wave received power detector (18') for detecting received power of a desired wave of a signal transmitted by the new base station (BS2);
a second interference wave received power detector (19') for detecting received power of an interference wave to the desired wave of the signal transmitted by the new base station (BS2);
a second SIR calculator (20') for calculating a second SIR based on the received power detected by the second desired wave received power detector (18') and the received power detected by the second interference wave received power detector (19');
an SIR selector (21) for comparing the first SIR with the second SIR and selecting from the first SIR and the second SIR, the greater SIR;
means (22) arranged to decide, in accordance with the selected SIR, a first transmission power control bit for designating transmission power of the old base station (BS1) and the new base station (BS2); and
a transmitter (26) for transmitting the first transmission power control bit to the old base station (BS1) and the new base station (BS2).

5. The mobile station as claimed in claim 4 further comprising:
a transmission power control bit extractor (15) for extracting a second transmission power control bit which designates transmission power of the mobile station (PS1), from a signal transmitted by the old base station (BS1), and a third transmission power control bit which designates transmission power of the mobile station (PS1), from a signal transmitted by the new base station (BS2);
a transmission power control bit selector (16) for comparing the transmission power designated by the second transmission power control bit and the transmission power designated by the third transmission power control bit, and selecting from the second transmission power control bit and the third transmission power control bit, the transmission power control bit designating the lower transmission power; and
a transmission power controller (17) for controlling the transmission power of the mobile station (PS1) in accordance with the selected transmission power control bit.

6. The mobile station as claimed in claim 4 or 5, wherein
the mobile station (PS1) is arranged to transmit a signal to the old base station (BS1) and the new base station (BS2) by using an identical spreading code and an identical transmission frequency, different spreading codes and an identical transmission frequency, an identical spreading code and different transmission frequencies, or different spreading codes and different transmission frequencies, and
the mobile station (PS1) is arranged to transfer communication from the old base station (BS1) to the new base station (BS2) in accordance with received power of a signal received from each of the old base station (BS1) and the new base station (BS2).

## Patentansprüche

1. Sendeleistungsregelungsverfahren zur Realisierung mittels einer mit mehreren Basisstationen kommunizierenden Mobilstation (PS1), bei dem die Mobilstation (PS1) während eines Weiterreichungszeitraums mit zwei Basisstationen (BS1, BS2) kommuniziert, wobei die Mobilstation (PS1) während einer weichen Weiterreichung, die eine Kommunikation zwischen der Mobilstation (PS1) und einer alten Basisstation (BS1) auf eine Kommunikation zwischen der Mobilstation (PS1) und einer neuen Basisstation (BS2) in einem CDMA-System überführt, eine geschlossene Sendeleistungsregelung realisiert; das Sendeleistungsregelungsverfahren ist **dadurch gekennzeichnet, dass** es die Schritte aufweist:
Messen eines ersten SIR eines von der alten Basisstation (BS1) übertragenen Signals an der Mobilstation (PS1) (S21);
Messen eines zweiten SIR eines von der neuen Basisstation (BS2) übertragenen Signals an der Mobilstation (PS1) (S21);
Vergleichen des ersten SIR mit dem zweiten SIR an der Mobilstation (PS1) (S22);
Auswählen des größeren SIR aus dem ersten SIR und dem zweiten SIR an der Mobilstation (PS1);
Bestimmen eines ersten Sendeleistungsregelungsbits zum Bezeichnen der Sendeleistung der alten Basisstation (BS1) und der neuen Basisstation (BS2) gemäß dem ausgewählten SIR an der Mobilstation (PS1) (S23); und
Übertragen des ersten Sendeleistungsregelungsbits von der Mobilstation (PS1) an die alte Basisstation (BS1) und die neue Basisstation (BS2).

2. Sendleistungsregelungsverfahren gemäß Anspruch 1, zusätzlich mit den Schritten:
Gewinnen eines zweiten Sendeleistungsregelungsbits an der Mobilstation (PS1), das die Sendeleistung der Mobilstation (PS1) bezeichnet, aus einem von der alten Basisstation (BS1) übertragenen Signal;
Gewinnen eines dritten Sendeleistungsregelungsbits an der Mobilstation (PS1), das die Sendeleistung der Mobilstation (PS1) bezeichnet, aus einem von der neuen Basisstation (BS2) übertragenen Signal;
Vergleichen der vom zweiten Sendeleistungsregelungsbit bezeichneten Sendeleistung mit der vom dritten Sendeleistungsregelungsbit bezeichneten Sendeleistung an der Mobilstation (PS1) (S11);
Auswählen des die geringere Sendeleistung bezeichnenden Sendeleistungsregelungsbits aus dem zweiten Sendeleistungsregelungsbit und dem dritten Sendeleistungsregelungsbit an der Mobilstation (PS1); und
Regeln der Sendeleistung der Mobilstation gemäß dem ausgewählten Sendeleistungsregelungsbit an der Mobilstation (PS1) (S12).

3. Sendleistungsregelungsverfahren gemäß Anspruch 1 oder 2, wobei
die Mobilstation (PS1) ein Signal an die alte Basisstation (BS1) und die neue Basisstation (BS2) überträgt, indem sie einen identischen Spreizcode und eine identische Sendefrequenz, unterschiedliche Spreizcodes und eine identische Sendefrequenz, einen identischen Spreizcode und unterschiedliche Sendefrequenzen, oder unterschiedliche Spreizcodes und unterschiedlichen Sendefrequenzen verwendet, und
die Mobilstation (PS1) die Kommunikation von der alten Basisstation (BS1) gemäß der empfangenen Leistung eines Signals, das sie sowohl von der alten Basisstation (BS1) als auch von der neuen Basisstation (BS2) empfangen hat, auf die neue Basisstation (BS2) überführt.

4. Mobilstation, die eingerichtet ist, während eines Weitereichungszeitraums mit einer alten Basisstation (BS1), in einer Zeller welcher sich die Mobilstation (PS1) befindet, und mit einer neuen Basisstation (BS2) zu kommunizieren, zu der die Mobilstation (BS2) transferiert, um eine geschlossene Sendeleistungsregelung in einem CDMA-System zu realisieren; die Mobilstation (PS1) ist **gekennzeichnet durch:**
einen ersten Detektor (18) der Empfangsleistung einer gewünschten Welle zum Erfassen der empfangenen Leistung einer gewünschten Welle eines von der alten Basisstation (BS1) übertragenen Signals;
einen ersten Detektor (19) der Empfangsleistung einer Störungswelle zum Erfassen der empfangenen Leistung einer Störungswelle zu der gewünschten Welle des von der alten Basisstation (BS1) übertragenen Signals;
einen ersten SIR-Rechner (20) zum Berechnen eines ersten SIR basierend auf der vom ersten Detektor (18) der Empfangsleistung einer gewünschten Welle erfassten empfangenen Leistung und der vom ersten Detektor (19) der Empfangsleistung einer Störungswelle erfassten empfangenen Leistung;
einen zweiten Detektor (18') der Empfangsleistung einer gewünschten Welle zum Erfassen der empfangenen Leistung einer gewünschten Welle eines von der neuen Basisstation (BS2) übertragenen Signals;
einen zweiten Detektor (19') der Empfangsleistung einer Störungswelle zum Erfassen der empfangenen Leistung einer Störungswelle zu der gewünschten Welle des von der neuen Basisstation (BS2) übertragenen Signals;
einen zweiten SIR-Rechner (20') zum Berechnen eines zweiten SIR basierend auf der vom zweiten Detektor (18') der Empfangsleistung einer gewünschten Welle erfassten empfangenen Leistung und der vom zweiten Detektor (19') der Empfangsleistung einer Störungswelle erfassten empfangenen Leistung;
eine SIR-Auswahleinrichtung (21) zum Vergleichen des ersten SIR mit dem zweiten SIR und Auswählen des größeren SIR aus dem ersten SIR und dem zweiten SIR;
eine Einrichtung (22), die zum Bestimmen eines ersten Sendeleistungsregelungsbits zum Bezeichnen der Sendeleistung der alten Basisstation (BS1) und der neuen Basisstation (BS2) gemäß dem ausgewählten SIR eingerichtet ist; und
, einen Sender (26) zum Übertragen des ersten Sendeleistungsregelungsbits an die alte Basisstation (BS1) und die neue Basisstation (BS2).

5. Mobilstation gemäß Anspruch 4, zusätzlich mit:
einer Sendeleistungsregelungsbit-Gewinnungseinrichtung (15) zum Gewinnen eines zweiten Sendeleistungsregelungsbit, das die Sendeleistung der Mobilstation (PS1) bezeichnet, aus einem von der alten Basisstation (BS1) übertragenen Signal, und eines dritten Sendeleistungsregelungsbits, das die Sendeleistung der Mobilstation (PS1) bezeichnet, aus einem von der neuen Basisstation (BS2) übertragenen Signal;
einer Sendeleistungsregelungsbit-Auswahleinrichtung (16) zum Vergleichen der vom zweiten Sendeleistungsregelungsbit bezeichneten Sendeleistung mit der vom dritten Sendeleistungsregelungsbit bezeichneten Sendeleistung und zum Auswählen des die geringere Sendeleistung bezeichnenden Sendeleistungsregelungsbits aus dem zweiten Sendeleistungsregelungsbit und dem dritten Sendeleistungsregelungsbit; und
einer Sendeleistungsregelung (17) zum Regeln der Sendeleistung der Mobilstation (PS1) gemäß dem ausgewählten Sendeleistungsregelungsbit.

6. Mobilstation gemäß Anspruch 4 oder 5, wobei:
die Mobilstation (PS1) eingerichtet ist, ein Signal an die alte Basisstation (BS1) und die neue Basisstation (BS2) zu übertragen, indem sie einen identischen Spreizcode und eine identische Sendefrequenz, unterschiedliche Spreizcodes und eine identische Sendefrequenz, einen identischen Spreizcode und unterschiedliche Sendefrequenzen, oder unterschiedliche Spreizcodes und unterschiedlichen Sendefrequenzen verwendet, und
die Mobilstation (PS1) eingerichtet ist, die Kommunikation von der alten Basisstation (BS1) gemäß der empfangenen Leistung eines Signals, das sie sowohl von der alten Basisstation (BS1) als auch von der neuen Basisstation (BS2) empfangen hat, auf die neue Basisstation (BS2) zu überführen.

## Revendications

1. Procédé de commande de puissance de transmission pour une mise en oeuvre par un poste (PS1) mobile communiquant avec des postes de base multiple, dans lequel, pendant une période d'attente, le poste mobile (PSI) communique avec deux postes (BS1, BS2) de base, le poste (PS1) mobile mettant en oeuvre une commande de puissance de transmission à boucle fermée pendant une pause logicielle qui transfère la communication entre le poste (PS1) mobile et un ancien poste (BS1) de base à la communication entre le poste (PS1) mobile et un nouveau poste (BS2) de base dans un système CDMA, le procédé de commande de puissance de transmission étant **caractérisé par** le fait de comporter des étapes qui consistent :
à mesurer, au poste (PS1) mobile, un premier SIR d'un signal transmis par l'ancien poste (BS1) de base (S21);
à mesure, au poste (PS1) mobile, un deuxième SIR d'un signal transmis par le nouveau poste (BS2) de base (S21);
à comparer, au poste (PS1) mobile, le premier SIR au deuxième SIR (S22);
à sélectionner, au poste (PS1) mobile, à partir du premier SIR et du deuxième SIR, le SIR le plus grand ;
à décider, au poste (PS1) mobile, conformément au SIR sélectionné, un premier bit de commande de puissance de transmission pour désigner la puissance de transmission du poste (BS1) de base ancien et du nouveau poste (BS2) de base (S23) ; et
à transmettre le premier bit de commande de puissance de transmission du poste (PS1) mobile au poste (BS1) de base ancien et au nouveau poste (BS2) de base.

2. Procédé de commande de puissance de transmission suivant la revendication 1, comportant en outre les étapes qui consistent :
à extraire, au poste (PS1) mobile, un deuxième bit de commande de puissance de transmission, qui désigne la puissance de transmission du poste (PS1) mobile, à partir d'un signal transmis par l'ancien poste (BS1) de base ;
à extraire, au poste (PS1) mobile, un troisième bit de commande de puissance de transmission, qui désigne la puissance de transmission du poste (PS1) mobile, à partir d'un signal transmis par le nouveau poste (BS2) de base ;
à comparer, au poste (PS1) mobile, la puissance de transmission désignée par le deuxième bit de commande de puissance de transmission et la puissance de transmission désignée par le troisième bit de commande de puissance de transmission (S11) ;
à sélectionner, au poste (PS1) mobile, à partir du deuxième bit de commande de puissance de transmission et du troisième bit de commande de puissance de transmission, le bit de commande de puissance de transmission désignant la puissance de transmission la plus faible ; et
à commande, au poste (PS1) mobile, la puissance de transmission du poste (PS1) mobile conformément au bit de commande de puissance de transmission sélectionné (S12).

3. Procédé de commande de puissance de transmission suivant la revendication 1 ou 2, dans lequel
le poste (PS1) mobile transmet un signal à l'ancien poste (BS1) de base et au nouveau poste (BS2) de base en utilisant un code d'étalement identique et une fréquence de transmission identique, différents codes d'étalement et une fréquence de transmission identique, un code d'étalement identique et différentes fréquences de transmission, ou différents codes d'étalement et différentes fréquences de transmission, et
le poste (PS1) mobile passe d'une communication de l'ancien poste (BS1) de base au nouveau poste (BS2) de base conformément à la puissance reçue d'un signal reçu à partir de chaque poste de l'ancien poste (BS1) de base et du nouveau poste (BS2) de base.

4. Poste mobile agencé pour communiquer, pendant une période de pause, avec un ancien poste (BS1) de base dans une cellule duquel existe le poste (PS1) mobile, et un nouveau poste (BS2) de base auquel le poste (BS2) mobile transfert pour mettre en oeuvre une commande de puissance de transmission à boucle fermée dans un système CDMA, le poste (PS1) mobile étant **caractérisé par** le fait de comporter :
un premier détecteur (18) de puissance reçue à onde souhaitée pour détecter la puissance reçue d'une onde souhaitée d'un signal transmis par l'ancien poste (BS1) de base ;
un premier détecteur (19) de puissance reçue d'onde d'interférence pour détecter la puissance reçue d'une onde d'interférence à l'onde souhaitée du signal transmis par l'ancien poste (BS1) de base ;
un premier calculateur (20) de SIR pour calculer un premier SIR sur la base de la puissance reçue détectée par le premier détecteur (18) de puissance reçue d'onde souhaitée et de la puissance reçue détectée par le premier détecteur (19) de puissance reçue d'onde d'interférence ;
un deuxième détecteur (18') de puissance reçue d'onde souhaitée pour détecter une puissance reçue d'une onde souhaitée d'un signal transmis par le nouveau poste (BS2) de base ;
un deuxième détecteur (19') de puissance reçue d'onde d'interférence pour détecter la puissance reçue d'une onde d'interférence à l'onde souhaitée du signal transmis par le nouveau poste (BS2) de base ;
un deuxième calculateur (20') de SIR pour calculer un deuxième SIR sur la base de la puissance reçue détectée par le deuxième détecteur (18') de puissance reçue d'onde souhaitée et de la puissance reçue détectée par le deuxième détecteur (19') de puissance reçue d'onde d'interférence ;
un sélecteur (21) de SIR pour comparer le premier SIR et le deuxième SIR et sélectionner parmi le premier SIR et le deuxième SIR le SIR le plus grand ;
des moyens (22) agencés pour décider, conformément au SIR sélectionné, un premier bit de commande de puissance de transmission pour désigner la puissance de transmission de l'ancien poste (BS1) de base et du nouveau poste (BS2) de base ; et
un émetteur (26) pour émettre le premier bit de commande de puissance de transmission vers l'ancien poste (BS1) de base et le nouveau poste (BS2) de base.

5. Poste mobile suivant la revendication 4, comportant en outre :
un extracteur (15) de bits de commande de puissance de transmission pour extraire un deuxième bit de commande de puissance de transmission qui désigne la puissance de transmission du poste (PS1) mobile, à partir d'un signal transmis par l'ancien poste (BS1) de base et un troisième bit de commande de puissance de transmission qui désigne la puissance de transmission du poste (PS1) mobile, à partir d'un signal transmis par le nouveau poste (BS2) de base ;
un sélecteur (16) de bits de commande de puissance de transmission pour comparer la puissance de transmission désignée par le deuxième bit de commande de puissance de transmission et la puissance de transmission désignée par le troisième bit de commande de puissance de transmission, et sélectionner à partir du deuxième bit de commande de puissance de transmission et du troisième bit de commande de puissance de transmission, le bit de commande de puissance de transmission désignant la puissance de transmission la plus faible ; et
un dispositif (17) de commande de puissance de transmission pour commander la puissance de transmission du poste (PS1) mobile conformément au bit de commande de puissance de transmission sélectionné.

6. Poste mobile suivant la revendication 4 ou 5, dans lequel
le poste (PS1) mobile est agencé pour transmettre un signal à l'ancien poste (BS1) de base et au nouveau poste (BS2) de base en utilisant un code d'étalement identique et une fréquence de transmission identique, différents codes d'étalement et une fréquence de transmission identique, un code d'étalement identique et différentes fréquences de transmission ou différents codes d'étalement et différentes fréquences de transmission, et
le poste (PS1) mobile est agencé pour transférer la communication du poste (BS1) de base ancien au poste (BS2) de base nouveau conformément à la puissance reçue d'un signal reçu à partir de chacun du poste (BS1) de base ancien et du poste (BS2) de base nouveau.
